Europäisches Patentamt

European Patent Office

Office européen des brevets

(11) Publication number: **0 329 868**
**A1**

# EUROPEAN PATENT APPLICATION

(21) Application number: 88301497.9

(51) Int. Cl.4: **A01N 25/18**

(22) Date of filing: 22.02.88

The references to the drawings are deemed to be deleted (Rule 43 EPC).

(43) Date of publication of application:
**30.08.89 Bulletin 89/35**

(84) Designated Contracting States:
**DE FR GB IT NL**

(71) Applicant: **NISSHO & CO. LTD.**
**9-24, Minami Ikebukuro 1-chome Toshima-ku Tokyo(JP)**

Applicant: **Toho Rayon Co., Ltd.**
**No. 3-9, Nihonbashi 3-chome Chuo-ku Tokyo(JP)**

Applicant: **NISSAN SHOJI CO. LTD.**
**18-14, Nishi Shinbashi 1-chome Minato-ku Tokyo(JP)**

(72) Inventor: **Toyama, Takashi**
**12-11, Midorimachi 4-chome Koganei-shi Tokyo(JP)**
Inventor: **Narita, Haruyoshi**
**5-16-113, Akabanedai 1-chome Kita-ku Tokyo(JP)**
Inventor: **Ishii, Tatsuya**
**1-36, Hase 1-chome Kamakura-shi Kanagawa-ken(JP)**

(74) Representative: **Silverman, Warren et al**
**HASELTINE LAKE & CO. Hazlitt House 28 Southampton Buildings Chancery Lane London WC2A 1AT(GB)**

(54) Low volatility agent slow release bodies.

(57) A low volatility agent slow release body, particularly an insect-repelling body comprises a carrier member containing carbon fibres and a low volatility agent in particular a cockroach-repellent contained in said carrier member. The low volatility agent body of the present invention maintains its intended effect for an extended period of time.

## LOW VOLATILITY AGENT SLOW RELEASE BODIES

The invention relates to low volatility agent slow release bodies and more particularly, but not exclusively, an insect-repelling body for preventing insects such as cockroaches from invading the interior of electronic, electrical or communications equipment or food storage locations, the bodies having a particularly long effective operating life.

Air conditioning equipment has found increasingly widespread use in houses, restaurants, offices and many other places. Unfortunately such equipment creates improved conditions for insect breeding. As a result, there has been an increase in the number of insects to be found in such places, the increase in the number of cockroaches having been particularly large leading to there now being a high probability of cockroaches getting into electronic equipment and the like. If cockroaches invade the interior of such equipment and die there, the skeletons of the cockroaches may cause malfunctioning of the equipment. To avoid this problem, it has been proposed to apply a cockroach-repellent adjacent to ventilating holes and other places through which cockroaches can enter the equipment. The repellents are usually applied by coating or spraying the exposed surfaces of the equipment at least around the ventilating holes of the equipment. The insect repellents applied in this way however volatilise, vaporise or diffuse and therefore their repellent function is lost in a short time. The repellent can also be used in a form in which it is coated or sprayed on ordinary paper, webs, shaped material or sintered material. However this mode of use too cannot be expected to ensure maintenance of the repellent function for a long time. Such retention of function for a long time is also desirable with other bodies containing organic compounds which volatilise, such as biocidally-effective compounds.

It is therefore an object of the present invention to provide a low volatility agent slow release body whose repellent effect is maintained for a long time.

According to the present invention, there is provided a low volatility agent slow release body comprising a carrier member containing activated carbon fibres and a low volatility agent adsorbed by the activated carbon fibres of said carrier member. The invention is particularly suited to insect repelling bodies containing insect repellents adsorbed by the carbon fibres.

The activated carbon fibres are obtained from polymeric carbon-containing filamentary material which can be formed of synthetic fibres such as acrylic fibres, regenerated fibres such as rayon fibres, vegetable fibres such as cotton fibres and animal fibres such as wool fibres. Such polymeric filamentary material is subjected to pre-oxidation at from 200 to 400°C to render it infusible and then pyrolyzed in an inert atmosphere at elevated temperature to convert it to carbon fibre material. This is then activated by controlled oxidation at even higher temperatures than those employed in the carbonization. This step may be carried out in an atmosphere of carbon dioxide, superheated steam, flue gas or even air or oxygen. The oxidation leads to a form pf carbon which is highly active in terms of surface area which is available for adsorption purposes. In view of the boiling point and molecular weight of cockroach-repelling agents, the activated carbon fibres preferably have an average specific surface area of from 600 - 1500 $m^2/g$ and an average diameter of fine pores therein of from 200 - 300 nm. Such carbon fibres possess a fine pore distribution suitable for retaining cockroach-repellents which is superior to that of activated carbon particles. In addition, a body of the above-mentioned carbon fibres may be made up into felt, a woven fabric or an open mesh non-woven fabric which can easily be shaped into a desired form for an insect-repelling assembly. With such fabric, it is possible to use activated carbon fibres of commercially available type in their production such fibres being preferably 5 to 50 $\mu$m in diameter and present in an amount of 5 to 500 $g/m^2$. On the contrary, activated carbon particles are not so easy to form into a shape desirable for an insect-repelling assembly.

The carrier member can be made entirely of activated carbon fibres, or it can also be made by mixing activated carbon fibres with pulp or incorporating them in a non-woven web and forming the mixture into a shape suitable for the carrier member. In such a case, the finished body preferably has a weight of 10 to 400 $g/m^2$, containing therein 10 to 95 weight percent of activated carbon fibres.

By the term "low volatility agent" as used herein is meant an agent able to escape from pores in the activated carbon fibres by volatilization to exert its intended effect, but possessing a low volatility so that it is not volatilized too rapidly. Generally it will be a compound able to be effective in very low atmospheric concentrations. Thus, for repelling of cockroaches, N,N-diethyl-m-toluamide is a suitable compound.

The low volatility agents can be retained by any one of various methods. For example, a bath can be prepared containing a liquid in which cockroach-repellent in an amount sufficient to provide 5 to 500 g of cockroach-repellent per square metre, i.e. per square metre of surface of carrier member itself rather than of total accessible pore surface area. A carrier member of desired shape is then dipped into the bath, and the dissolved repellent is adsorbed. Alternatively, repellents can be sprayed onto a carrier member. Thus, a chamber can be filled with a repellent in a gaseous condition and a carrier member is passed through the chamber to adsorb the repellent thereon. When the carrier member is a sheet or film, it can be passed between a pair of coating rolls to which repellent is supplied, to coat thereby the repellent on the carrier member.

The following example illustrates the invention. In the example reference will be made to the accompanying drawings, wherein:

FIGURE 1 is a perspective view of a shelter provided with a cockroach-repelling sheet embodying the present invention; and

FIGURE 2 is a plan view showing the locations in a test room of shelters as shown in Figure 1 and other shelters having no repellent sheets.

## EXAMPLE

Activated carbon fibres having an average diameter of about 10 $\mu$m, a specific surface area of about 800 m$^2$/g and fine pores averaging about 240 nm in diameter were mixed into a paper forming pulp to produce a paper having a weight of 60 g/m$^2$ of which the activated carbon fibres were present in an amount of about 30 g/m$^2$. The paper was then cut to a predetermined size to make a carrier member. The cockroach-repellent used was N,N-diethyl-m-toluamide, having a specific gravity of 0.995 to 1.005, a boiling point of 165 to 170$^\circ$C under a pressure of 15 mmHg, and a molecular weight of 191. The cockroach-repellent was adsorbed on the carrier member at a rate of 100 g per 1 m$^2$. The resulting cockroach-repelling sheet was subjected to the following test.

As shown in Figure 1, to one surface of a 4 mm x 10 cm x 10 cm veneer board 1 was applied the cockroach-repellent sheet, which was adhered thereto using adhesive tapes, the sheet bearing the reference numeral 3. Three such boards were stacked and separated from each other by cork spacers 5 in such a way that the sheet 3 carried by each board faced upwards. Then, a veneer board 7 of the same size as boards 1 but without a sheet 3 thereon was placed on cork spacers 5 on the uppermost board 1 to produce a shelter 9 having the cockroach repelling sheets. For comparative purposes, a shelter 11 was prepared having the same construction as the shelter 9 except that it was not equipped with the repellent sheets 3.

Then, for test purposes, these two kinds of shelters 9, 11 were placed in a chamber 13 at the corners thereof, as shown in Figure 2. The chamber 13 had a floor measuring 120 cm by 120 cm. The height of the chamber was 15 cm.

100 male and 100 female cockroaches (Blattella germanica) were released into the chamber 13. Thereafter the numbers of cockroaches hiding in the shelters were counted once a day. During the test, the shelters were moved clockwise from corner to corner after each head count of cockroaches in order to equalise the conditions among the shelters. The results obtained are set out in the following Table:

Table

| Number of cockroaches found in each type of shelter | | | |
|---|---|---|---|
| | Time | | |
| | 1 day | 2 days | 3 days |
| Shelters 9 | 0 | 0 | 0 |
| Shelters 11 | 146 | 178 | 158 |
| Index of repellancy | 100 | 100 | 100 |
| Note 1: | | | |
| The numbers represent the total of cockroaches in shelters 9 or shelters 11. | | | |
| Note 2: | | | |
| Index of repellancy = (1 - number in shelters 9/number in shelters 11) x 100 | | | |

From the foregoing it can be seen that the shelters containing paper sheets embodying this invention were very effective in excluding cockroaches, this effect being maintained without any diminution for three days.

**Claims**

1. A low volatility agent slow release body comprising a carrier member containing activated carbon fibres and a low volatility agent adsorbed by the activated carbon fibres of said carrier member.

2. An insect-repelling body as claimed in claim 1, wherein the activated carbon fibres have an average specific surface area of from 600 - 1500 m²/g and an average pore diameter of 200-300 nm.

3. A body as set forth in claim 1 or 2, wherein the carrier member is a felt structure, a woven fabric or an open mesh non-woven fabric formed from carbon fibres 5 to 50 μm in diameter.

4. A body as set forth in claim 3, wherein the activated carbon fibres are present in the carrier member in an amount of from 50 to 500 gram per square metre.

5. A body as set forth in claim 1 or 2, wherein the carrier member is a paper or a non-woven fabric having a weight of 10 to 400 gram per square metre containing therein 10 to 95 weight percent of activated carbon fibres.

6. A body as set forth in claim 1 or 2, wherein the activated carbon fibres are 5 to 50 μm in diameter.

7. A body as claimed in any preceding claim, wherein the low volatility agent is an insect repelling agent.

8. A body as set forth in claim 7 or 9, wherein said insect-repelling agent is a cockroach-repelling agent.

9. A body as set forth in claim 7 or 8, wherein said insect-repelling agent is present in an amount of 5 to 500 grams per square metre of said carrier member.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 053 936 (JOHNSON & JOHNSON PRODUCTS)<br>* Page 2, line 1 - page 4, line 19; claims 1,2,4-8 * | 1-6 | A 01 N 25/18 |
| Y | CENTRAL PATENTS INDEX, BASIC ABSTRACTS JOURNAL, Section C, AGDOC, week D31, 23rd September 1981, abstract no. 56183 D/31, Derwent Publications Ltd, London, GB; & JP-A-56 73 001 (EARTH SEIYAKU K.K.) 17-06-1981<br>* Abstract * | 1-9 | |
| Y | GB-A- 386 067 (S.A. LE CARBONE)<br>* Page 1, lines 53-103; claims 1-3 * | 1-9 | |
| A | FR-A- 977 728 (PROCEDES INDUSTRIELS ET CHARBONS ACTIFS)<br>* Page 1, right-hand column, lines 13-23; examples; claims * | 1-9 | |
| A | CENTRAL PATENTS INDEX, BASIC ABSTRACTS JOURNAL, Section C, AGDOC, week 8704, 25th March 1987, abstract no.026560/04, Derwent Publications Ltd, London, GB; & JP-A-61 284 210 (EARTH SEIYAKU K.K.) 15-12-1986<br>* Abstract * | 1-9 | TECHNICAL FIELDS SEARCHED (Int. Cl.4)<br><br>A 01 N |

The present search report has been drawn up for all claims

| Place of search | Date of completion of the search | Examiner |
|---|---|---|
| THE HAGUE | 08-11-1988 | FLETCHER A.S. |